# EUROPÄISCHE PATENTSCHRIFT

(11) **EP 1 153 506 B1**
(45) Veröffentlichungstag und Bekanntmachung des Hinweises auf die Patenterteilung: **02.01.2003**
(21) Anmeldenummer: 00904966.9
(22) Anmeldetag: 27.01.2000
(51) Int. Cl.: H04N 5/12

(54) **VERFAHREN ZUR STABILISIERUNG DER HORIZONTAL- UND VERTIKALSYNCHRONIMPULSE IN EINEM VIDEOSIGNAL**
METHOD FOR STABILIZING THE HORIZONTAL AND VERTICAL SYNCHRONIZING PULSES IN A VIDEO SIGNAL
PROCEDE POUR STABILISER LES IMPULSIONS DE SYNCHRONISATION HORIZONTALES ET VERTICALES DANS UN SIGNAL VIDEO

(30) Priorität: 12.02.1999 DE 19908071
(43) Veröffentlichungstag der Anmeldung: 14.11.2001
(73) Patentinhaber: Lear Automotive Electronics GmbH, 96317 Kronach (DE); Bayerische Motoren Werke Aktiengesellschaft, 80809 München (DE)
(72) Erfinder: FISCHER, Gerhard, D-96369 Weissenbrunn (DE); TIGGES, Michael, D-85406 Zolling (DE)
(74) Vertreter: Eichstädt, Alfred, Dipl.-Ing.
(86) Internationale Anmeldenummer: EP0000616
(87) Internationale Veröffentlichungsnummer: WO00048391

(56) Entgegenhaltungen:
- EP-A- 0 329 576
- EP-A- 0 520 312
- WO-A-94/26041
- US-A- 4 677 484
- US-A- 5 495 294

## Beschreibung

Die Erfindung betrifft ein Verfahren zur Stabilisierung der Horizontal- und Vertikalsynchronimpulse eines empfangenen, demodulierten Fernsehsignals in einem Fernsehempfänger mit einer Synchronimpulsabtrennschaltung, mit der die Horizontal- und/oder Vertikalimpulse aus dem empfangenen demodulierten Fernsehsignal selektiert werden mit den im Oberbegriff des Anspruchs 1 angegebenen Merkmale, sowie eine Schaltungsanordnung zur Durchführung des Verfahrens.

Ein gattungsgemäßes Verfahren ist aus der US-A-5,495,294 bekannt. Die selektierten Horizontal- und Vertikalimpulse werden einer Plausibilitätsprüfung unterzogen. Dabei wird lediglich festgestellt, ob solche Impulse vorhanden sind. Weitergehende Prüfungen werden nicht durchgeführt. Im Falle des Fehlens eines Synchronimpulses wird dieser durch einen generierten ersetzt.

Aus der WO 94 26041 A ist ebenfalls ein gattungsgemäßes Verfahren bekannt, bei dem überprüft wird, ob Vertikal- oder Horizontalsynchronimpulse vorliegen. Im Falle des Fehlens werden solche generiert. Ein mehrstufiges Prüfungsverfahren ist nicht angegeben, ferner werden die empfangenen Synchronimpulse nicht ersetzt, falls diese nicht eindeutig identifizierbar sind.

Aus der EP - A -0 329 576 ist ebenfalls eine Erkennungsschaltung für die Synchronimpulse in einem Videosignal bekannt, die durch einfache Plausibilitätsprüfung feststellt, ob Synchronsignale vorhanden sind oder nicht und solche ersetzt. Eine Plausibilitätsprüfung nach mehreren Kriterien wird nicht durchgeführt, ebenso wird das vorhandene empfangene Synchronsignal nicht durch ein generiertes ersetzt.

Aus der DE 691 11 152 T2 ist eine Synchronisiersignal-Abtrennschaltung zum Abtrennen von Synchronimpulsen in einem Fernsehsignalempfänger bekannt, die eine Signalerzeugungseinrichtung aufweist, um auf die Eingabe eines aus einem zusammengesetzten Synchronisiersignals hin ein Steuersignal zu erzeugen, das sich während einer bestimmten Periode in einem vorgegebenen Zustand befindet, wobei die Periode beginnt, wenn eine erste vorgegebene Zeitperiode ab der Eingabe des Vertikalsynchronisiersignals verstrichen ist und endet, wenn eine zweite vorgegebene Zeitperiode nach der Eingabe des Vertikalsynchronisiersignals verstrichen ist. Weiterhin ist eine Auswahleinrichtung zum Empfangen des Verbundsynchronisiersignals eines aus dem zusammengesetzten Synchronisiersignal abgetretenen Horizontalsynchronisiersignals und des Steuersignals vorgesehen, die das zusammengesetzte Synchronisiersignal ausgibt, wenn sich das Steuersignal im vorgegebenen Zustand befindet und das abgetrennte Horizontalsynchronisiersignal ausgibt, wenn sich das Steuersignal in einem anderen Zustand als dem vorgegebenen Zustand befindet.

Aus der DE 39 17 666 A1 ist eine Schaltungsanordnung zur Ableitung von Impulssignalen, welche mit dem Synchronisiersignal eines von dem Magnetband eines Videomagnetbandgerätes abgenommenen Videosignals verkoppelt sind, bekannt, die eine Schaltung zur Klemmung des Videosignals aufweist und eine Schwellwertschaltung zur Abtrennung des Synchronsignals von dem geklemmten Videosignal. Die einzelnen Synchronimpulse werden hinsichtlich ihrer Impulsbreite und -lage mit einer Prüfschaltung in Abhängigkeit von einem erzeugten Taktsignal überprüft. Eine digitale Phasenregelschleife mit einem über einen programmierbaren Festspeicher rückgekoppelten Zähler leitet Impulssignale ab, die frei von Drop-Out-Störungen im Videosignal sind. Zur Plausibilitätsprüfung der Impulsbreite und Impulslage wird das Taktsignal und das abgetrennte Synchronsignal einer Prüfschaltung zugeführt, die einen Zähler zum Zählen der Impulse der Taktsignale enthält. Beim Vorliegen einer fallenden Flanke im Synchronisiersignal wird der Zählvorgang gestartet und beim Vorliegen einer steigenden Flanke wieder gestoppt Die Anzahl der gezählten Taktimpulse bestimmt die Breite der jeweils anliegenden Synchronimpulse. Sollte im Zählintervall ein Drop-Out liegen, so wird der Zählvorgang durch Steuerung über das Drop-Out-Signal abgebrochen und der Zähler zurückgesetzt. Die Überprüfung erfolgt also in Abhängigkeit eines Taktsignals und eines Torimpulssignals.

Beim Fernsehsignalempfang, insbesondere beim Empfang mittels eines Fernsehempfängers in einem Kraftfahrzeug, ist das Problem gegeben, daß durch Reflexionen, Feldstärkeeinbrüche, Empfangsstörungen und dergleichen nicht sichergestellt ist, daß die Horizontal- und Vertikalimpulse, die für den Synchronbetrieb des Fernsehsignalempfängers, z.B. eines Fernsehempfangsgerätes, notwendig sind, empfangen werden können bzw. deren Qualität so schlecht ist, daß sie nicht verarbeitbar sind. Dies hat bei einem Fernsehempfangsgerät mit Bildröhre oder Flachdisplay unmittelbar zur Folge, daß das Bild in horizontaler bzw. vertikaler Richtung durchrollt, durchfällt oder zittert. Bei entsprechender Schaltungstechnik kann es darüber hinaus vorkommen, daß beim Fahren das Bild völlig aussetzt und die Synchronisation sich erst wieder stabilisiert, wenn ein einwandfreier Empfang gegeben ist.

Der Erfindung liegt die Aufgabe zugrunde, ein Verfahren der gattungsgemäßen Art sowie eine Schaltungsanordnung zu verbessern, die eine Stabilisierung der Horizontal- und Vertikalsynchronimpulse auch bei extrem ungünstigen Empfangsverhältnisses bewirken.

Die Aufgabe löst die Erfindung durch die im Anspruch 1 angegebenen Verfahrensschritte sowie durch eine Schaltungsanordnung zur Durchführung des Verfahrens gemäß Anspruch 8.

Gemäß der Erfindung werden die selektierten Horizontal- und Vertikalimpulse jeweils einer Plausibilitätsprüfung unterzogen, wobei die Frequenz- und Phasenlage der Vertikal- und/oder Horizontalimpulse in bezug auf das anliegende Signal überprüft wird und im Falle, daß keine Abweichung festgestellt wird, mindestens eine PLL aktiviert und als stabiler Regelkreis für die Synchronimpulsgenerierung eingeschaltet und im Falle des Auftretens von Abweichungen im aktuellen Regelzustand gehalten wird, wodurch an den Ausgängen jeweils die stabilisierten Horizontal- und/oder Vertikalimpulse anliegen, die mindestens anstelle empfangener verrauschter oder fehlender Horizontal- und Vertikalimpulse in das Videoeingangssignal eingefügt werden.

Selbstverständlich kann gemäß der Lehre der Erfindung auch jeder einzelne im Eingangssignal enthaltene Synchronimpuls durch die neu generierten bzw. stabilisierten Horizontal- und Vertikalsynchronimpulse ersetzt werden. Auf diese Weise wird den Signalverarbeitungsschaltungen des Fernsehgerätes ein Videosignal mit einwandfreien stabilisierten Synchronimputsen zur Verfügung gestellt, wodurch insbesondere bei Verwendung in einem Fernsehempfänger in einem Auto beim Durchfahren einer bestimmten Strecke Schwankungen der Empfangseigenschaften zu keinen Synchronisationsfehlern bei der Wiedergabe des empfangenen Fernsehbildes führen.

Durch die Detektion der Vor-, Haupt- und Nachtrabanten zu den Vertikalsynchronimpulsen können die ersten (ungeradzahligen Zeilen) und die zweiten (geradzahligen Zeilen) Halbbilder erkannt werden und die Synchronimpulse normgerecht eingefügt werden, ohne Halbbilder zu vertauschen.

Weitere Verfahrensschritte sind in den Ansprüchen 2 bis 7 angegeben. Im Anspruch 7 sind die Plausibilitätsprüfungen, die die Schaltung durchführt, im einzelnen angegeben. Vorteilhaft ist dabei die Auswertung über eine einstellbare Meßperiodendauer über mehrere Bilder.

Vorteilhafte Weiterbildungen der Schaltungen gemäß Anspruch 8 zur Durchführung des Verfahrens sowie Schaltungsdetails sind in den Ansprüchen 9 und 10 angegeben. Die im Anspruch 8 angegebene Schaltung ist für den Einsatz in einem Fernsehempfänger in einem Kraftfahrzeug zum mobilen Empfang ausgelegt.

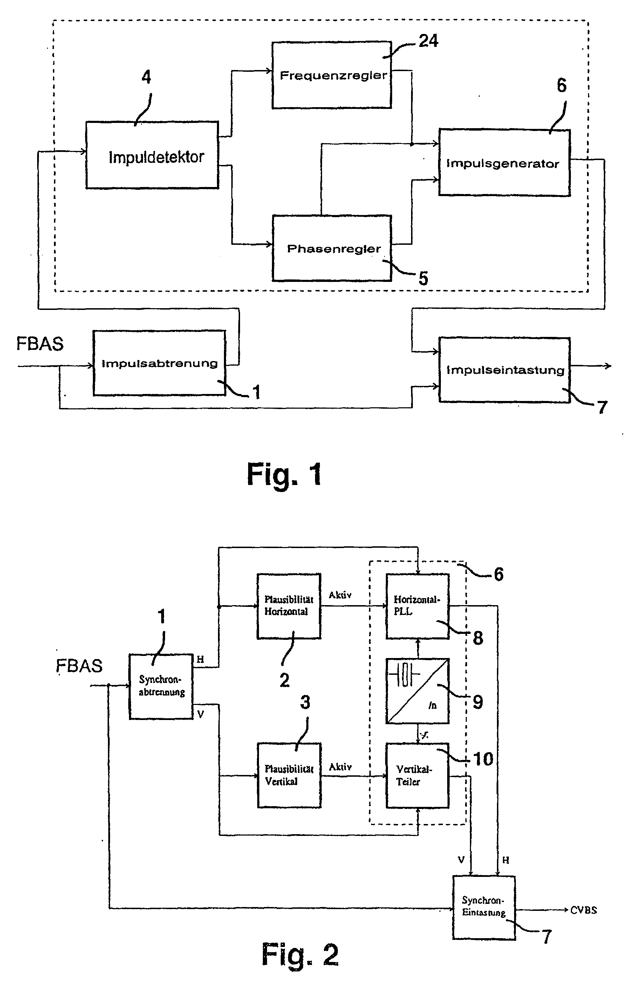

Die Erfindung wird nachfolgend anhand der Blockschaltbilder in den Fig. 1 bis 3 in den Zeichnungen ergänzend erläutert.

Das Blockschaltbild 1 vermittelt einen Überblick über die Horizontal-/Vertikalstabilisierungsschaltung, die zur Realisierung des erfinderischen Verfahrens eingesetzt wird. Das am Eingang anliegende FBAS-Signal, das demodulierte empfangene Femsehsignal, wird einer Impulsabtrennschaltung 1 zugeführt, an deren Ausgang Synchronimpulse anliegen, die im Ausführungsbeispiel einem Impulsdetektor 4, der hier nicht näher beschrieben ist, zugeführt werden. Am Ausgang des Impulsdetektors sind Horizontal- und Vertikalimpulse abgreifbar. Diese werden, wie das Blockschaltbild weiter zeigt, einem Frequenzregler 24 und einem Phasenregler 5 zugeführt, deren Ausgänge mit einem Impulsgenerator 6 verbunden sind, der stabilisierte Horizontal- und Vertikalsynchronimpulse abgibt, die absolut zeitgenau und pegelrichtig über die Impulseintastschaltung 7 in das an dessen zweitem Eingang anliegende Videosignal wieder eingebracht werden, so daß an dem Ausgang ein FBAS-Signal mit stabilisierten Horizontal- und Vertikalimpulsen anliegt, das von den Nachfolgeschaltungen des Fernsehempfängers verarbeitet werden kann.

Aus dem in Fig. 2 dargestellten Blockschaltbild ist ersichtlich, daß die Frequenz- und Phasenregler 24 und 5 und der Impuisgenerator Plausibilitätsschaltungen für die Horizontal- und Vertikalimpulse umfassen, die von dem Ausgang der Impulsabtrennschaltung 1 abgreifbar sind. Diese Plausibilitätsschaltungen überprüfen die Frequenz- und Phasenlage in bezug auf das anliegende Signal. Weicht dieses nicht ab, so wird eine nachgeschaltete PLL 8 des Impulsgenerators 6 aktiviert und als stabiler Regelkreis für die Synchronisationsimpulsgenerierung eingeschaltet. Sobald die Plausibilitätsüberprüfung feststellt, daß Abweichungen vorhanden sind, wird die Horizontal-PLL 8 abgehängt und im aktuellen Regelzustand gehalten, so daß an dessen Ausgang die Horizontalimpulse zeitgenau und pegelrichtig anliegen.Die Horizontalpegelregelschaltung mit ihrer Regelschleife ist nicht näher dargestellt. Lediglich der freischwingende Oszillator 9, der auch einen Teiler beinhaltet, über den der Vertikalteiler 10 gesteuert ist, ist dargestellt Dieser Vertikalteiler 10 wird aktiviert von der Plausibilitätsschaltung 3 für die Vertikalimpulse, die in gleicher Weise arbeitet wie die für die Horizontalimpulse, nur bezogen auf die Vertikalimpulse. Der Vertikalteiler 10 arbeitet freilaufend und gibt Vertikalimpulse aus, wenn kein Reset bzw. keine Synchronisation über die Plausibilitäts-Vertikal-Überprüfungsschaltung festgestellt ist Das Vertikalsignal wird auf die richtige Periodendauer überprüft. Ist die Periodendauer richtig, wird der Vertikalteiler 10 zurückgesetzt, an dessen Ausgang dann ein Ersatzvertikalsynchronsignal liegt. Das Horizontalsignal wird der PLL-Schaltung 8 solange zugefuhrt und aktiviert, solange die nachfolgende genannten drei Bedingungen erfüllt sind.
a) Der Abstand zwischen zwei Horizontalsignalen entspricht der Norm (beispielsweise 64 µs bei PAL und 63,55 µs NTSC) und wie oft diese Bedingung innerhalb eines vorgegebenen Zeitraums erfüllt wird.
b) Die Horizontalsollfrequenz übersteigt eine bestimmte Regelschwankung nicht.
c) Am Eingang liegt ein Videosignal an.

Erst wenn alle drei Kriterien erfüllt sind, wird eine in diesem Blockschaltbild nicht dargestellte Sample and Hold Schaltung freigeschaltet, die es der PLL ermöglicht, auf die Horizontalfrequenz zu locken. An den Ausgängen der Schaltung steht also ein Horizontal- und Vertikalsignalimpuls zur Verfügung, der in das Originalvideoeingangssignal eingetastet werden kann, zu welchem Zweck diese Signale an der Impulseintastschaltung 7 anliegen, so daß auch bei Wegfall des Senders, z.B. bei Rauschen, weiterhin Synchronsignale im Videosignal vorhanden sind, um die Ablenkung der Ablenkschaltungen synchronisieren zu können. Gemäß der PAL-Norm müssen zwischen zwei Vertikalimpulsen 20 ms und 16,68 ms bei NTSC liegen. Wenn diese Periode gegeben ist, liegt ein Kriterium vor, daß die Phase vom abgetrennten Signal zum Eingang richtig ist. In dem Moment wird der Ersatzimpuls eingetastet bzw. eingestanzt. Wenn das Kriterium nicht erfüllt ist, läuft der Vertikaltreiber weiter. Die Schaltung erkennt also stets sicher, wann Horizontal- und Vertikalphasen richtig zum Eingangssignal liegen und wann nicht, und tastet die generierten Synchronsignale zu den richtigen Zeitpunkten in das Videosignal ein, so daß am Ausgang das FBAS-Signal mit normgerechten Synchronimpulsen abgreifbar ist.

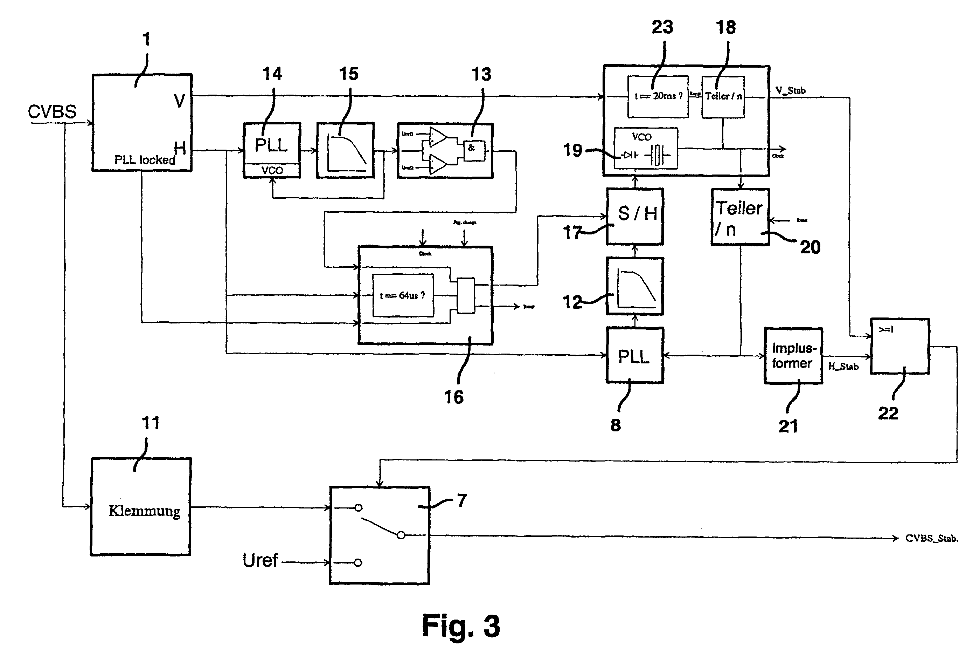

In Fig. 3 ist die Schaltung nach Fig. 2 detaillierter dargestellt. Das FBAS-Eingangssignal wird in einer Impulsabtrennschaltung 1 selektiert und die Vertikal- und Horizontalimpulse ausgegeben. Die Plausibilitätsschaltung für die Horizontalimpulse besteht aus einer PLL mit spannungsgesteuertem Oszillator, Block 14, einem in der PLL-Schleife enthaltenen Schleifenfilter 15 sowie einer nachgeschalteten Komparatorschaltung 13, die die Regelschwankungen gegen zwei Referenzspannungen vergleicht. Liegt die Regelspannungsschwankung innerhalb eines definierten Bereiches, so wird die nachgeschaltete Impulsabstandsmeßschaltung 16 für die Abstandsmessung zweier benachbarter Horizontalimpulse freigeschaltet. Als drittes Kriterium wird zugleich festgestellt, ob ein Videosignal am Eingang anliegt. Sind alle drei Kriterien erfüllt, so wird eine Sample and Hold Schaltung 17 freigeschaltet, so daß es der PLL-Schaltung 8 ermöglicht wird, auf die Horizontalfrequenz zu locken. Zur PLL-Schleife gehören dabei auch ein Schleifenfilter 12 und der im Block 19 mit eingezeichnete spannungsgeregelte Oszillator 19 sowie ein Teiler 20, der zugleich an seinem Ausgang die zeitgenauen Horizontalimpulse abgibt, die einerseits der PLL-Schaltung 8 und andererseits einer Impulsformerstufe 21 zugeführt werden, die pegelrichtige Horizontalimpulse an die Logikschaltung 22 abgibt, um hierüber die Impulse an die Impulseintastschaltung 7 abzugeben, damit die Impulse in das anliegende Videosignal im Bedarfsfall oder generell eingestanzt werden, so daß am Ausgang ein FBAS-Signal mit zeit- und pegelrichtigen Horizontal- und Vertikalimpulsen anliegt. Die Vertikalimpulse, die von der Impulsabtrennschaltung 1 abgegeben werden, werden im vorliegenden Fall nur auf ihren Impulsabstand hin überprüft. Die Impulsabstandsmeßschaltung 23 überprüft das Signal in bezug auf PAL-Norm auf einen Abstand von 20 ms und in bezug auf NTSC-Norm auf einen Abstand von 16,68 ms. Wenn dieses Kriterium gegeben ist, wird ein Reset-Impuls an den Teiler / n abgegeben, der dann einen stabilisierten Vertikalsynchronimpuls an die logische Schaltung 22 abgibt, über die die Eintastschaltung 7 derart gesteuert wird, daß entsprechend zeitgenau die Einstanzung des V-lmpulses in das FBAS-Signal erfolgt.

## Patentansprüche

1. Verfahren zur Stabilisierung der Horizontal- und Vertikalsynchronimpulse in einem empfangenen, demodulierten Fernsehsignal in einem Fernsehsignalempfänger mit einer Synchronimpulsabtrennschaltung, mit der die Horizontal- und/oder Vertikalimpulse aus dem empfangenen demodulierten Fernsehsignal selektiert und die selektierten Horizontal- und/oder Vertikalimpulse jeweils einer Plausibilitätsprüfung unterzogen werden, wobei die Frequenz- und Phasenlage der Horizontal- und/oder Vertikalimpulse in bezug auf das anliegende demodulierte Fernsehsignal überprüft werden und im Falle, daß keine Abweichung festgestellt wird, mindestens eine PLL als stabiler Regelkreis für die Synchronisationsimpuisgenerierung eingeschaltet und im Falle des Auftretens von Abweichungen im aktuellen Regelzustand gehalten wird, und an den Ausgängen jeweils die stabilisierten Horizontal- und/oder Vertikalimpulse mindestens anstelle empfangener verrauschter oder fehlender Horizontal- und Vertikalimpulse anliegen, die in das Videosignal eingetastet werden,
**dadurch gekennzeichnet,**
- **daß** mindestens die nachfolgenden drei Prüfungen durchführt werden:
a) Feststellen ob zwischen zwei Horizontalsignalen ein vorgegebener Zeitraum einer Zeile liegt und wie oft diese Bedingung innerhalb eines vorgegebenen Zeitraums erfüllt wird;
b) Feststellen ob die Horizontalsollfrequenz eine bestimmte Regelschwankung nicht überschreitet und
c) Feststellen ob ein Videosignal am Eingang anliegt,
- **daß** dann, wenn alle drei Bedingungen erfüllt sind, von der Plausibilitätsschaltung ein Aktivierungsimpuls an die PLL abgegeben wird, um diese auf eine bestimmte Horizontalfrequenz festzulegen, und
**daß** im Falle der Nichterfüllung mindestens eines Kriteriums die generierten Vertikal- und/oder Horizontalimpulse in das Originalvideosignal an die Stelle der empfangenen eingetastet werden, die von der PLL phasenstarr gehalten werden.

2. Verfahren nach Anspruch 1, **dadurch gekennzeichnet, daß** nur die selektierten Horizontalimpulse einer Plausibilitätsprüfung unterworfen werden, und daß die Vertikalimpulse durch Teilung von den Horizontalimpulsen abgeleitet werden.

3. Verfahren nach Anspruch 1 oder 2, **dadurch gekennzeichnet, daß** das Vertikalsynchronsignal auf die richtige Periodendauer hin überprüft wird, daß ein Teiler, an dessen Ausgang ein Ersatz-Vertikalsynchronsignal liegt, zurückgesetzt wird, wenn die Periodendauer als übereinstimmend mit dem Sollwert festgestellt ist.

4. Verfahren nach einem der vorhergehenden Ansprüche, **dadurch gekennzeichnet, daß** die Lage der Vor-, Haupt- und Nachtrabanten im Videosignal zur Feststellung des ersten oder zweiten Halbbildes detektiert und ausgewertet wird.

5. Verfahren nach Anspruch 1, **dadurch gekennzeichnet, daß** die selektierten Vertikalimpulse einer Vertikal-PLL zugeführt werden, die in Abhängigkeit von einer Plausibilitätsprüfung der Vertikalimpulse aktiviert wird und an deren Ausgang mindestens die Vertikalsynchronimpulse anliegen, die mit den Horizontalsynchronisierimpulsen in das weitergeleitete Videoeingangssignal eingetastet werden.

6. Verfahren nach Anspruch 4 und 5, **dadurch gekennzeichnet, daß** am Ausgang der Vertikal-PLL die Vor-, Haupt- und Nachtrabanten zusätzlich anliegen.

7. Verfahren nach Anspruch 1 oder 6, **dadurch gekennzeichnet, daß** die im Videosignal enthaltenen Synchronimpulse stets herausgenommen und durch die von der PLL generierten ersetzt werden.

8. Schaltungsanordnung zur Durchführung des Verfahrens nach einem der vorhergehenden Ansprüche,
**dadurch gekennzeichnet, daß** diese enthält:
- eine Synchronimpulsabtrennschaltung (1) für die Selektion der Horizontal- und Vertikalsynchronimpulse aus dem empfangenen Fernseh- bzw. Videosignal,
- eine erste Plausibilitätsschaltung (2) für die Horizontalsynchronimpulse zum Feststellen, ob zwischen zwei Horizontalsignalen ein vorgegebener Zeitraum einer Zeile liegt und wie oft diese Bedingung innerhalb eines vorgegebenen Zeitraums erfüllt wird, zum Feststellen, ob die Horizontalsollfrequenz eine bestimmte Regelschwankung nicht überschreitet, und zum Feststellen, ob ein Videosignal am Eingang anliegt,
- eine weitere Plausibilitätsschaltung (3), die die Frequenz- und Phasenlage der Vertikalimpulse in Bezug auf das demodulierte Fernsehsignal überprüft,
- eine Horizontal-PLL (8), an der die Horizontalimpulse einerseits und die Impulse eines freischwingenden spannungsgeregelten Oszillators (9) andererseits anliegen, und die von der Plausibilitätsschaltung (2) für die Horizontalsynchronimpulse in Abhängigkeit von den ausgehenden Steuerimpulsen einschaltbar ist,
- welche Horizontal-PLL (8) ihrerseits Horizontalsynchronimpulse abgibt,
- einen von der Vertikalplausibilitätsschaltung (3) gesteuerten Vertikalteiler (10), der einen Eingang aufweist, an dem die empfangenen Vertikalsynchronimpulse anliegen und einen weiteren Eingang aufweist, an dem die durch Teilung der Oszillatorfrequenz des Oszillators (9) generierten Vertikalimpulse anliegen, und die Vertikalsynchronisationsimpulse abgibt, und die Vertikalsynchronimpulse und die Horizontalsynchronimpulse in einer Synchroneinstanzschaltung (7) in das Videosignal an die entsprechenden Signalstellen vor dem Bildinhalt einer Zeile und/oder eines Halbbildes eintastet.

9. Schaltungsanordnung nach Anspruch 8, **dadurch gekennzeichnet, daß** das Videoeingangssignal an einer Spitzenwert-Klemmschaltung (11) anliegt.

10. Schaltungsanordnung nach einem der Ansprüche 8 oder 9, **dadurch gekennzeichnet, daß** die Plausibilitätsschaltung (2) für die Horizontalimpulse aufweist:
eine PLL-Schaltung (14) mit einem Schleifenfilter (15),
eine nachgeschaltete Komparatorschaltung (13) und eine Impulsabstandsmeßschaltung (16), deren Ausgang mit einer Horizontalfrequenzhalteschaltung (17) der Horizontal-PLL-Schaltung (8) verbunden ist.

## Claims

1. Method of stabilising the horizontal and vertical synchronisation pulses in a received demodulated television signal in a television receiver with a synchronisation pulse separating circuit, by which the horizontal and/or vertical pulses are selected from the received demodulated television signal and the selected horizontal and/or vertical pulses are subjected on each occasion to a plausibility check, wherein the frequency position and phase position of the horizontal and/or vertical pulses are checked with respect to the demodulated television signal present and in the case that no deviation is ascertained at least one phase-locked loop is switched on as a stable regulating circuit for the synchronisation pulse generator and in the case of occurrence of deviations is held in the actual regulating state, and the stabilised horizontal and/or vertical pulses, which are keyed into the video signal, are present at the outputs on each occasion at least instead of received noise-laden or missing horizontal and vertical pulses, **characterised in that**
- at least the following three checks are performed:
a) establishing whether a predetermined time period of one line is present between two horizontal signals and how often this condition is fulfilled within a predetermined time period,
b) establishing whether the nominal horizontal frequency does not exceed a specific regulating fluctuating and
c) establishing whether a video signal is present at the input,
- when all three conditions are fulfilled, delivering an activation pulse from the plausibility circuit to the phase-locked loop in order to fix this on a specific horizontal frequency and
- in the case of non-fulfilment of at least one criterion, the generated vertical and/or horizontal pulses, which are held locked in phase by the phase-locked loop, are inserted into the original video signal in place of the received signals.

2. Method according to claim 1, **characterised in that** only the selected horizontal pulses are subjected to a plausibility check and that the vertical pulses are derived by division of the horizontal pulses.

3. Method according to claim 1 or claim 2, **characterised in that** the vertical synchronisation signal is checked for the correct period duration and that a divider, at the output of which a substitute vertical synchronisation signal is present, is reset when the period duration is established as corresponding with the desired value.

4. Method according to any one of the preceding claims, **characterised in that** the position of the pre-equalising, main equalising and post-equalising pulses in the video signal are detected and evaluated for ascertaining the first or second frame.

5. Method according to claim 1, **characterised in that** the selected vertical signals are fed to a vertical phase-locked loop which is activated in dependence on a plausibility check of the vertical pulses and at the output of which at least the vertical synchronisation pulses are present, which together with the horizontal synchronisation pulses are keyed into the video input signal passed on.

6. Method according to claim 4 and 5, **characterised in that** the pre-equalising, main equalising and post-equalising pulses are additionally present at the output of the vertical phase-locked loop.

7. Method according to claim 1 or claim 6, **characterised in that** synchronisation pulses present in the video signal are constantly removed and replaced by those generated by the phase-locked loop.

8. Circuit arrangement for carrying out the method according to one of the preceding claims, **characterised in that** this comprises:
- a synchronisation signal separating circuit (1) for selection of the horizontal and vertical synchronisation pulses from the received television or video signal,
- a first plausibility circuit (2) for the horizontal synchronisation pulses establishing whether a predetermined time period of one line is present between two horizontal signals and how often this condition is fulfilled within a predetermined time period, establishing whether the nominal horizontal frequency does not exceed a specific regulating fluctuating and establishing whether a video signal is present at the input,
- a further plausibility circuit (3) checking the frequency position and the phase position of the vertical pulses with respect to the demodulated television signal,
- a horizontal phase-locked loop (8), at which the horizontal pulses on the one hand and the pulses of a free-running voltage-regulated oscillator (9) on the other hand are present and which can be switched on by the plausibility circuit (2) for the horizontal synchronisation pulses in dependence on the issued control pulses,
- which horizontal phase-locked loop (8) in tum delivers horizontal synchronisation pulses,
- a vertical divider (10) which is controlled by the vertical plausibility circuit (3), has an input at which the received vertical synchronisation pulses are present and a further input at which the vertical pulses generated by division of the oscillator frequency of the oscillator (9) are present, and delivers vertical synchronisation pulses and
- a synchronisation punching-in circuit (7) which keys-in the generated vertical and horizontal synchronisation pulses into the video signal at the appropriate signal positions before the image content of a line and/or a frame.

9. Circuit arrangement according to claim 8, **characterised in that** the video input signal is applied to at a peak value clamping circuit (11).

10. Circuit arrangement according to claim 8 or claim 9, **characterised in that** the plausibility circuit (2) for the horizontal signals comprises:
- a phase-locked loop circuit (14) with a loop filter (15),
- a downstream comparator circuit (13) and
- a pulse spacing measurement circuit (16), the output of which is connected with a horizontal frequency holding circuit (17) of the horizontal phase-locked loop circuit (8).

## Revendications

1. Procédé pour stabiliser les impulsions de synchronisation horizontale et verticale dans un signal de télévision reçu démodulé dans un récepteur de signaux de télévision comportant un circuit de séparation d'impulsions de synchronisation, à l'aide duquel les impulsions horizontales et/ou verticales sont sélectionnées dans le signal de télévision reçu démodulé et les impulsions horizontales et/ou verticales sélectionnées sont soumises respectivement à un contrôle de vraisemblance, et selon lequel la position de fréquence et de phase des impulsions horizontales et/ou verticales est contrôlée par rapport au signal de télévision appliqué démodulé et, dans le cas où aucun écart n'est établi, au moins un circuit PLL en tant que circuit de régulation stable est activé pour la production d'impulsions de synchronisation et, dans le cas de l'apparition d'écarts, le circuit est maintenu dans l'état actuel de réglage, et
aux sorties sont appliquées, à la place d'impulsions horizontales et verticales reçues affectées d'un bruit ou manquantes, respectivement les impulsions horizontales et/ou verticales stabilisées, qui sont injectées dans le signal vidéo, et
**caractérisé en ce**
**qu'**on exécute au moins les trois contrôles suivants consistant à:
a) déterminer si un intervalle de temps prédéterminé d'une ligne se situe entre deux signaux horizontaux et avec quelle fréquence cette condition est satisfaite à l'intérieur d'un intervalle de temps prédéterminé;
b) déterminer si la fréquence de consigne horizontale ne dépasse pas une variation déterminée de régulation, et
c) déterminer si un signal vidéo est présent à l'entrée,
- **que** lorsque ces trois conditions sont toutes satisfaites, une impulsion d'activation est délivrée par le circuit de vraisemblance au circuit PLL pour régler ce dernier sur une fréquence horizontale déterminée, et
- **que**, dans le cas où au moins un critère n'est pas satisfait, les impulsions verticales et/ou horizontales générées sont injectées dans le signal vidéo original à la place des impulsions reçues, qui sont maintenues à phase fixe par le circuit PLL.

2. Procédé selon la revendication 1, **caractérisé en ce que** seules les impulsions horizontales sélectionnées sont soumises à un contrôle de vraisemblance, et que les impulsions verticales sont dérivées, par division, des impulsions horizontales.

3. Procédé selon la revendication 1 ou 2, **caractérisé en ce que** le signal de synchronisation vertical est contrôlé en ce qui concerne la durée correcte de la période et qu'un diviseur, à la sortie duquel est prévu un signal de synchronisation verticale de remplacement, est ramené à l'état initial lorsque la durée de la période est déterminée comme coïncidant avec la valeur de consigne.

4. Procédé selon l'une des revendications précédentes, **caractérisé en ce que** la position des impulsions d'égalisation amont, principale et aval dans le signal vidéo est détectée et évaluée pour la détermination de la première ou de la deuxième trame.

5. Procédé selon la revendication 1, **caractérisé en ce que** les impulsions verticales sélectionnées sont envoyées à un circuit PLL vertical, qui est activé en fonction d'un contrôle de vraisemblance des impulsions verticales et à la sortie duquel sont présentes au moins les impulsions de synchronisation verticale, qui sont injectées avec les impulsions de synchronisation horizontale, dans le signal d'entrée vidéo transmis.

6. Procédé selon les revendications 4 et 5, **caractérisé en ce que** les impulsions d'égalisation amont, principales et aval sont appliquées en supplément à la sortie du circuit PLL vertical.

7. Procédé selon la revendication 1 ou 6, **caractérisé en ce que** les impulsions de synchronisation contenues dans le signal vidéo sont extraites en permanence et sont remplacées par des impulsions de synchronisation produites par le circuit PLL.

8. Montage pour la mise en oeuvre du procédé selon la revendication précédente, **caractérisé en ce que** ce dernier contient:
- un circuit (1) de séparation des impulsions de synchronisation pour la sélection des impulsions de synchronisation horizontales et verticales à partir du signal de télévision ou signal vidéo reçu;
- un circuit de vraisemblance (2) pour les impulsions de synchronisation horizontale pour déterminer si un intervalle de temps prédéterminé d'une ligne est présent entre deux signaux horizontaux et avec quelle fréquence cette condition est satisfaite au cours d'un intervalle de temps prédéterminé,
pour déterminer si la fréquence horizontale de consigne ne dépasse pas une variation déterminée de régulation et pour déterminer si un signal vidéo est présent à l'entrée,
- un autre circuit de vraisemblance (3), qui contrôle la position de fréquence et de phase des impulsions verticales par rapport au signal de télévision démodulé,
- un circuit PLL horizontal (8), auquel sont appliquées d'une part les impulsions horizontales et d'autre part les impulsions d'un oscillateur à oscillations libres (9), réglé par la tension, et qui peut être activé par le circuit de vraisemblance (2) pour les impulsions de synchronisation horizontale en fonction des impulsions de commande sortantes,
- lequel circuit PPL horizontal (8) délivre pour sa part des impulsions de synchronisation horizontales,
- un diviseur vertical (10), qui est commandé par le circuit de vraisemblance (3) pour les impulsions verticales et qui comporte une entrée, à laquelle les impulsions de synchronisation verticale reçues sont appliquées, et possède une autre entrée, à laquelle sont appliquées les impulsions verticales produites par division de la fréquence de l'oscillateur (9), et qui délivre des impulsions de synchronisation verticale et injecte des impulsions de synchronisation verticale et des impulsions de synchronisation horizontale sont injectées, dans un circuit d'injection de synchronisation (7), dans le signal vidéo aux emplacements correspondants du signal se situant avant le contenu d'une ligne et/ou d'une trame de l'image.

9. Montage selon la revendication 8, **caractérisé en ce que** le signal d'entrée vidéo est appliqué à un circuit (11) de verrouillage de valeur crête.

10. Montage selon l'une des revendications 8 ou 9, **caractérisé en ce que** le circuit de vraisemblance (2) pour les impulsions horizontales comporte:
un circuit PLL (14) comportant un filtre en boucle (15),
un circuit comparateur (13) branché en aval et un circuit (16) de mesure de la distance entre impulsions, dont la sortie est reliée à un circuit (17) de maintien de la fréquence horizontale du circuit PLL horizontal (8).
